# EUROPEAN PATENT APPLICATION

(11) **EP 1 684 292 A1**
(43) Date of publication of application: **26.07.2006**
(21) Application number: 05107569.5
(22) Date of filing: 17.08.2005
(51) Int. Cl.: G11B 20/18, G06F 3/06, G11B 27/32, G11B 15/02

(54) **Data storage apparatus and method**

(30) Priority: 21.01.2005 GB 0501240
(71) Applicant: Hewlett-Packard Development Company, L.P., Houston, TX 77070 (US)
(72) Inventor: CLARKE, Andrew Malcolm George, BS34 8QZ, Bristol (GB); EVANS, Nigel Ronald, BS34 8QZ, Bristol (GB); MACKELDEN, John Mark, BS34 8QZ, Bristol (GB)
(74) Representative: Marsh, David John

(57) **Abstract**

A method is provided for storing data on a tape by means of data storage apparatus programmed to record the data in accordance with a format specifying a log of tape-usage information and a series of recording regions to store the data. Errors in the recorded data are detected and an error entry for each error is recorded in the log. The error entry identifies the recording region in which the error is located.

## Description

### FIELD OF THE INVENTION

The present invention relates to storing data on a tape in accordance with a format in which tape usage information is logged on the tape.

### BACKGROUND OF THE INVENTION

It is known to provide the storage and retrieval of digital information on magnetic tape in a format that is referred to as the DDS format which has developed through a number of versions. In a DDS tape drive, a magnetic tape cassette is loaded into the tape drive and the tape in the cassette is transported past a rotary head drum to record overlapping oblique tracks across the tape by means of read/write heads carried on the drum. The DDS format provides for a number of specific areas on the tape including a device area for loading and testing the tape, a system area that includes a tape log and a data area for recording user data. The tape log is provided to record tape-usage information. The tape log is read when a tape cassette is loaded into the tape drive and the tape log is updated by being overwritten when the tape cassette is unloaded.

The tape log may contain information as to the number of groups of data that are read or written, the number of errors when writing or reading data and a load count. The information read from the tape log is passed to a host computer that may report the log information to an end-user of the tape cassette or perform some analysis of the information.

Functional difficulties may arise from a degradation of the tape or a malfunction of the tape drive caused, for example, through contamination of the read/write heads. If degradation of the tape can be distinguished from malfunctions of the tape drive, the tape drive can be eliminated as the cause of failures in reading and writing data. Furthermore failed attempts to read from or write to degraded tapes can be avoided once the tape has been identified as subject to degradation. The possible contamination of the read/write heads by a degraded tape may also be avoided.

US patent 5,576,903 describes a helical scan tape drive that reads and writes a stream of data records received from a host processor, in stripes on a magnetic tape. Apparatus operationally independent of the host processor provides administrative data relating to the data records written on the magnetic tape. The administrative information is written in a header segment of the magnetic tape located before the data records. The administrative information includes tape usage statistics, an identification of the tape drives on which the tape was mounted, a record of the number of read/write errors detected and corrected and a collection of error statistics.

### SUMMARY OF THE INVENTION

According to the present invention, there is now provided a method of storing data on a tape by means of data storage apparatus programmed to record the data in accordance with a format specifying a log of tape-usage information and a series of recording regions to store the data, the method comprising the steps of detecting errors in the recorded data and recording in the log an error entry for each error identifying the recording region in which the error is located,
characterised in that;
the method comprises the further steps of reading the log of tape usage information to check for the presence of error entries and determining if there are multiple error entries recorded in the log that identify the same recording region.

Further according to the present invention, there is provided data storage apparatus for storing data on a tape, the apparatus comprising recording means to record the data in accordance with a format specifying a log of tape-usage information and a series of recording regions to store the data, the apparatus being programmed to detect errors in the data and to record in the log an error entry for each error identifying the recording region in which the error is located
characterised in that;
the data processing apparatus is programmed to check for multiple error entries recorded in the log and to check if multiple error entries identify the same recording region.

### DESCRIPTION OF THE DRAWINGS

The invention will now be described, by way of example only, by reference to the accompanying drawings in which;
Figure 1 shows a block diagram of the components of a magnetic tape recording system embodying the present invention;
Figure 2 shows the main physical components of a tape deck included in the system of Figure 1,
Figure 3 is a diagrammatic representation of two data tracks recorded on a tape by means of the tape deck of Figure 2,
Figure 4 is a diagram showing the layout of a tape recorded in accordance with the present invention,
Figure 5 is a flow diagram of steps according to the present invention to record an update to a log recorded on the tape of Figures 4,
Figures 6A, 6B and 6C are explanatory diagrams of a first error pattern occurring on the tape of Figure 4,
Figures 7A, 7B, 7C, 7D and 7E are explanatory diagrams of a second error pattern occurring on the tape of Figure 4, and
Figure 8 is a flow diagram of steps according to the present invention for reading the log on the tape of Figure 4.

### DETAILED DESCRIPTION OF THE INVENTION

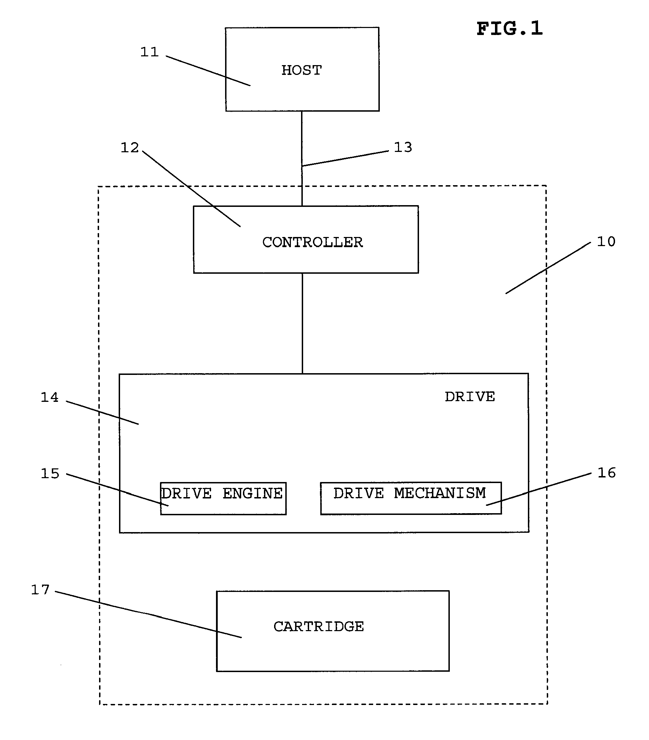

Referring to Figure 1, there is shown a data storage system 10 embodying the present invention. The system includes a host 11 coupled to a controller 12 via an interface 13. The controller 12 is programmed to control a tape drive 14 that includes a drive engine 15 and a drive mechanism 16. The drive mechanism is adapted to receive a tape cartridge 17. A controlling software application on the host 11 controls the reading and writing of data on a magnetic data tape in the tape cartridge 17.

The host system 11 has at least one central processing unit (CPU) and a memory to store the controlling software application. The interface 13 connecting the host system 11 to the controller 12 may be any suitable proprietary standard bus known to those skilled in the art.

The drive mechanism 16 includes electrical and mechanical components that receive, position and access tape cartridges. The drive mechanism has components to lock a tape cartridge in place, an ejection motor and read/write heads. The drive engine 15 is a data processor that is programmed to supervise the operations of the drive mechanism 16 and to manage the flow of data to be recorded in or read from a tape cartridge 17 received in the drive 14.

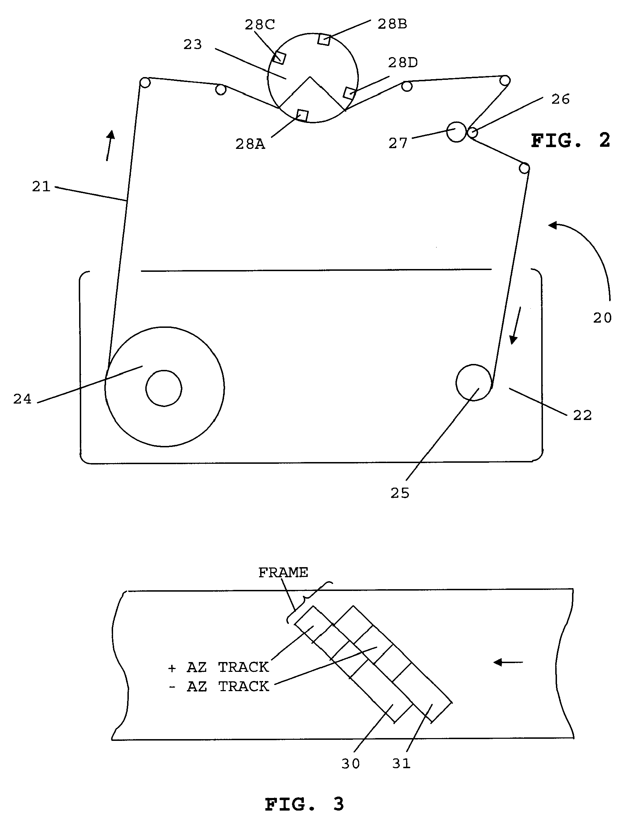

Referring to Figure 2, there is shown the basic layout of the tape drive 14 which is in the form of a helical-scan tape deck 20 in which tape 21 from a tape cartridge 22 passes at an angle across a rotary head drum 23. The tape is driven in the direction indicated by the arrows from a motor driven supply reel 24 to a motor driven take up reel 25. A capstan 26 and pinch roller 27 control the passage of the tape past the head drum 23. The rotary head drum 23 carries two magnetic write heads 28A and 28B spaced apart by 180° and two read heads 28C and 28D also spaced apart by 180°. The heads 28A and 28B are arranged to write a succession of overlapping oblique data tracks 30, 31 on the tape as shown in Figure 3. The two tracks 30, 31 are representative of a succession of tracks along the tape that are recorded according to a DDS format. The track written by the head 28A has a positive azimuth while the track written by the head 28B has a negative azimuth. Each pair of positive and negative azimuth tracks 30,31 constitutes a frame.

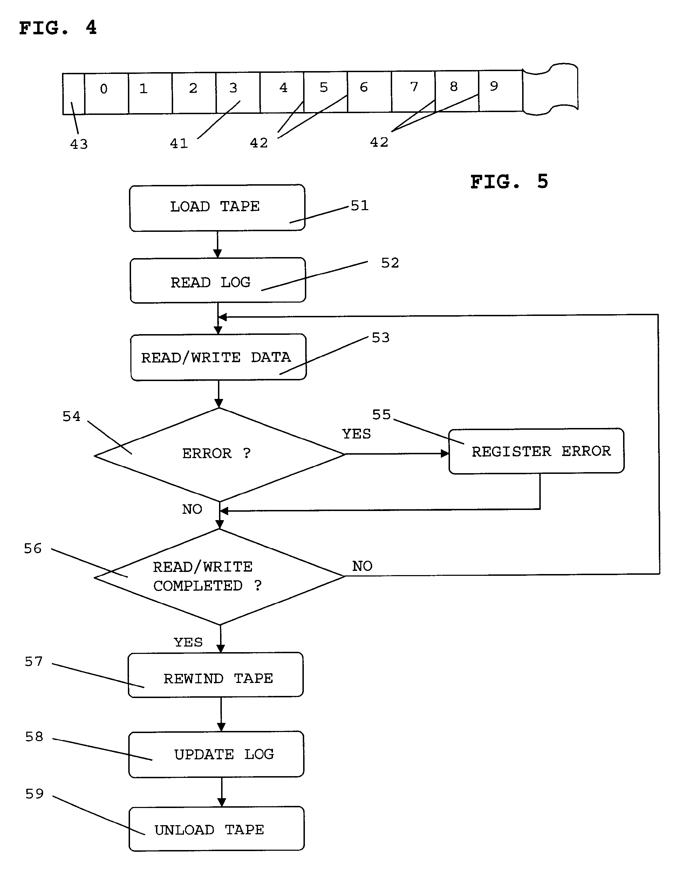

The tape 21 may formatted so as to have a single space for data or may be formatted as a partitioned tape in which data may be recorded in one partition independently of data recorded in another partition on the tape. The present invention may be applied to either a single data space tape or a partitioned tape. Figure 4 shows schematically the layout of the data area of the tape 21. The data area 41 is divided into a series of 256 logical sections divided by section boundaries 42 each having a reference number to identify the logical section. The first ten sections referenced 0 to 9 are shown in Figure 4. In addition to the 256 logical sections, the tape has a tape-usage log recorded in a log area 43 located at the beginning of the tape. The tape-usage log contains diagnostic information entered at each unload of the tape 21 in a manner to be described.

Figure 5 is a flow chart that shows steps in the method of entering information in the tape log. In a first step 51, the tape 21 is loaded into the tape drive for a data read/write session. In step 52 the log area 43 of the tape 21 is read by the tape drive and the data, if any, previously stored in the log is registered by the drive engine 15. In step 53 the tape 21 is advanced to enable data to be read from or written to the logical sections of the data area 41 of the tape by means of the heads 28A, 28B, 28C and 28D. As each logical section of the tape 21 is advanced, the occurrence of read or write errors is monitored in step 54. If an error is detected, an error code is registered in the drive engine 15 in step 55. The error code represents the type of error and the reference number identifying the individual logical section within which the error occurred. Following the step 55, the process moves to step 56 where a check is performed to determine if any further sections are to be read from or written to. If no error is detected in the step 54, the process moves directly to the step 56 bypassing the step 55. If further data sections have to be read from or written to, the process returns to repeat the step 53 and, if not, the process moves on to step 57 in which the tape 21 is rewound to access the tape log area 43 of the tape 21. In the step 58, the log is updated with diagnostic information comprising an identifier code representing the identity of the tape drive, and any error codes registered by the drive engine 15 in the current read/write session. After the log has been updated, the tape is unloaded in step 59.

The tape log has the capacity to store diagnostic data that is relevant to the previous 12 sessions in which the tape was loaded into a tape drive. When the log is updated in the step 58, the information for the present session is added to the log and the oldest information is deleted. For each of the previous 12 sessions, including the most recently completed session, the diagnostic information includes the drive identifier of the tape drive into which the tape was loaded and any error code registered in the session, the error code representing the type of failure together with the reference number of the individual logical section of the tape where the failure has occurred. The tape log is used to store other diagnostic information relevant to each tape load session including, without limitation, tape alert flags encountered during use of the tape drive, a load count representing the number of times the tape has been loaded and a count of the pulling hours of each tape load.

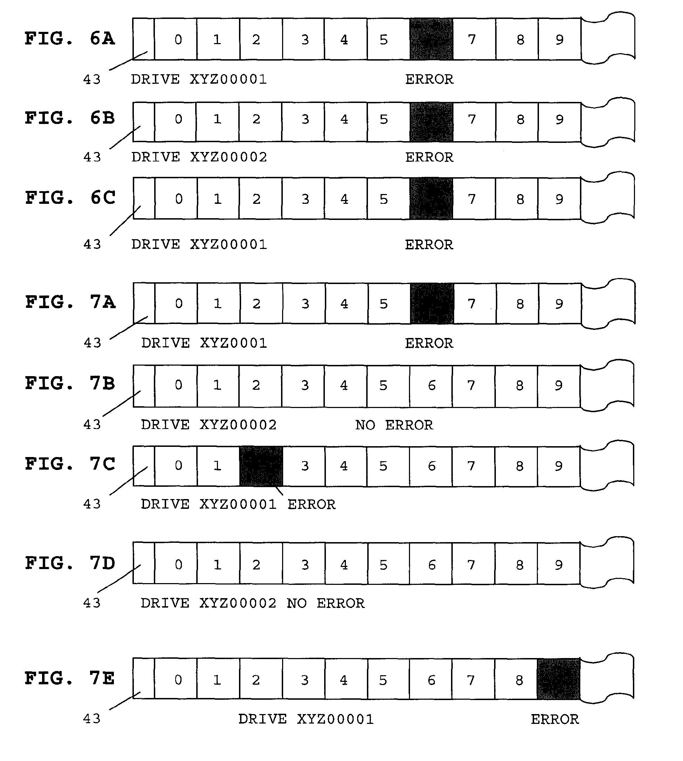

The diagnostic information in the tape log is useful to determine whether the tape 21 is itself the cause of errors or whether the tape drive 14 is the cause of errors. Figures 6A to 6C illustrate a first case where the tape 21 can be diagnosed as the cause of errors and Figures 7A to 7E illustrate a second case where one of the tape drives on which the tape has been loaded can be diagnosed as the cause of errors. Taking the first case, in Figure 6A the tape 21 has had a load session in a tape drive that has the notional tape drive identification code XYZ 00001 and has suffered an error in the tape section 6 and an error entry for that error is recorded in the log upon tape unload at the end of the session. In Figure 6B, the tape 21 has had a load session in another tape drive that has a notional tape drive identification XYZ 00002 and has suffered the same error in the same tape section 6. This error is recorded in the update of the log at the end of the tape session. In Figure 6C, the tape 21 has had a load session in the tape drive XYZ 00001 and yet again has suffered an error in the tape section 6 that is recorded in the tape log in the update for that session.

Turning now to the second case, in Figure 7A, the tape 21 has had a load session in a tape drive that has the notional tape drive identification code XYZ 00001 and has suffered an error in the tape section 6. An entry for the error is recorded in the log at the end of the tape session. In Figure 7B, the tape 21 has had a load session in the tape drive that has the notional tape drive identification XYZ 00002 and has suffered no errors. The log is updated at the end of the session but has no error entries for that session. In Figure 7C, the tape 21 has had a load session in the tape drive XYZ 00001 and has suffered an error in the tape section 2 and an entry for that error is recorded in the log at the end of the tape session. In Figure 7D, the tape 21 has had a load session in the tape drive that has the notional tape drive identification XYZ 00002 and again has suffered no errors. The log is again updated but has no error entries for that session. Finally, in Figure 7E, the tape 21 has had a load session in the tape drive XYZ 00001 and has suffered an error in the tape section 9 that is recorded in the update of the log at the end of the tape session.

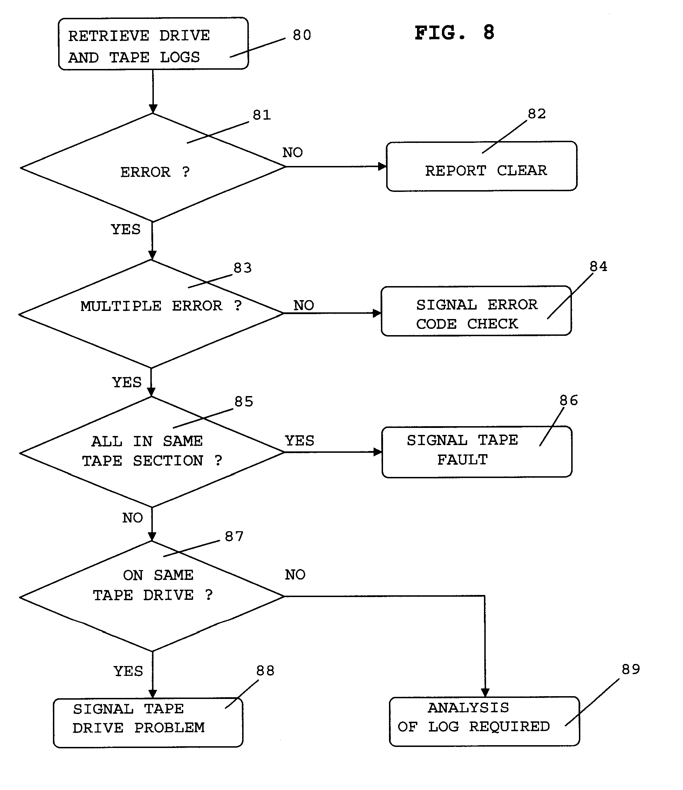

The diagnosis of the cause of errors on the tape 21 will now be described with reference to Figure 8. Figure 8 represents steps that are performed in data processing apparatus that may be constituted by the host processor 11 or by any other suitably programmed data processing apparatus that is supplied with the data that is recorded in the drive and the log in the tape area 43. In step 80, the diagnostic information including the error codes is retrieved from the drive and tape logs. In step 81, a check is made on whether any errors are recorded. If not, in step 82 a clear report is signalled. If, in step 81, one or more errors are detected, the process moves to step 83 where a check is made whether there are multiple errors. If not, the error code is checked in step 84 to determine the type of error that has occurred and to determine an appropriate response to the error. The result of that check may, for example, be that a cleaning operation is conducted on the read/write heads 82A, 82B, 82C and 82D by loading a cleaning tape into the tape drive. If, in step 83 it is determined that there are multiple errors, the process moves to step 85.

In step 85, a check is made whether all the errors occurred in the same tape section in a case such as that illustrated by way of example in Figures 6A to 6C. If the check in step 85 shows that the errors did all occur in the same tape section, then a tape fault is signalled in step 86. The programming of the data processing apparatus provides a degree of tolerance in the measurement of the positions of the errors along the tape by treating errors in immediately adjacent tape sections as though they occurred in the same tape section. If in the step 85 it is determined that the errors did not all occur in the same tape section, the process moves to step 87. In step 87 a check is made whether the errors occurred on the same tape drive. If so, a potential fault in that tape drive is signalled in step 88. Further analysis of the tape drive may be performed on the fault in the tape drive leading to recommendations to clean the read/write heads or upgrade the programming of the tape drive or flagging the drive as having a fault requiring repair.

If in the step 87 it is determined that the errors did not all occur on the same tape drive, an indication is signalled in step 89 that the source of the error is indeterminate. In this case, further analysis of the log is indicated using the other diagnostic information recorded in the log such as the tape pulling hours to identify the extent to which the tape may be degraded.

What has been described is a method of storing data on a tape by means of a tape drive programmed to record the data in accordance with a format specifying a log of tape-usage information and a series of recording regions to store the data. Errors in the recorded data are detected and an error entry is recorded in the log for each error. The error entry for each detected error identifies the recording region in which the error is located. Subsequent analysis of the data recorded in the log can reveal whether multiple errors are located in the same recording region which would suggest a degradation of the tape in that recording region.

## Claims

1. A method of storing data on a tape (21) by means of data storage apparatus (10) programmed to record the data in accordance with a format specifying a log (43) of tape-usage information and a series of recording regions to store the data, the method comprising the steps of detecting errors in the recorded data and recording in the log (43) an error entry for each error identifying the recording region in which the error is located
**characterised in that**;
the method comprises the further steps of reading the log (43) of tape usage information to check for the presence of error entries and determining if there are multiple error entries recorded in the log (43) that identify the same recording region.

2. A method as claimed in claim 1, wherein the data is recorded in a plurality of data recording sessions and the log (43) is updated following each data recording session.

3. A method as claimed in claim 2, wherein an entry is made in the log (43) identifying the data storage apparatus used for each data recording session.

4. A method as claimed in claim 1, 2 or 3, comprising the step of providing an output indication of a failure of the tape (21) when there are multiple error entries identifying the same recording region.

5. A method as claimed in claim 4, comprising the step of providing an output indication of the identity of the said same recording region.

6. A method as claimed in any one of claims 1 to 5, comprising the step of checking whether error entries are recorded in each of a plurality of data recording sessions using the same data storage apparatus.

7. A method as claimed in claim 6, comprising the step of providing an output indication of the identity of the said same data storage apparatus.

8. Data storage apparatus (10) for storing data on a tape (21), the apparatus comprising recording means (14) to record the data in accordance with a format specifying a log (43) of tape-usage information and a series of recording regions to store the data, the apparatus being programmed to detect errors in the data and to record in the log (43) an error entry for each error identifying the recording region in which the error is located
**characterised in that**;
the data processing apparatus is programmed to check for multiple error entries recorded in the log (43) and to check if multiple error entries identify the same recording region.

9. Apparatus as claimed in claim 8, the apparatus being programmed to update the log (43) following each of a plurality of data recording sessions.

10. Apparatus as claimed in claim 9, programmed to update the log (43) at the end of a data recording session with an entry identifying the data storage apparatus used for the data recording session.

11. Data processing apparatus as claimed in claim 8, 9 or 10, the data processing apparatus being programmed to provide an output indication of a failure of the tape (21) when there are multiple error entries identifying the same recording region.

12. Data processing apparatus as claimed in claim 11, the data processing apparatus being programmed to provide an output indication of the identity of the said same recording region.

13. Data processing apparatus as claimed in any one of claims 8 to 12, the data processing apparatus being programmed to check whether error entries are recorded in each of a plurality of data recording sessions using the same data storage apparatus.

14. Data processing apparatus as claimed in claim 13, the data processing apparatus being programmed to provide an output indication of the identity of the said same data storage apparatus.

15. A computer program that, when loaded on a computer control system, is effective to control data storage apparatus to record data on a tape (21) in accordance with a format specifying a log (43) of tape-usage information and a series of recording regions to store the data, to detect errors in the data and to record in the log (43) an error entry for each error identifying the recording region in which the error is located
**characterised in that**;
the program is effective to check for multiple error entries recorded in the log (43) and to check if multiple error entries identify the same recording region.

16. A program as claimed in claim 15, effective to control the data storage apparatus to update the log (43) following each of a plurality of data recording sessions.

17. A program as claimed in claim 16, effective to control the data storage apparatus to update the log (43) at the end of a data recording session with an entry identifying the data storage apparatus used for the data recording session.

18. A program as claimed in claim 15, 16 or 17, the program being effective to cause the data processing apparatus to provide an output indication of a failure of the tape (21) when there are multiple error entries identifying the same recording region.

19. A program as claimed in claim 18, effective to cause the data processing apparatus to provide an output indication of the identity of the said same recording region.

20. A program as claimed in any one of claims 15 to 19, effective to cause the data processing apparatus to check whether error entries are recorded in each of a plurality of data recording sessions using the same data storage apparatus.

21. A program as claimed in claim 20, effective to cause the data processing apparatus to provide an output indication of the identity of the said same data storage apparatus.
